Europäisches Patentamt

European Patent Office

Office européen des brevets

(19)

(11) Numéro de publication : **0 192 559**
**B1**

(12) **FASCICULE DE BREVET EUROPÉEN**

(45) Date de publication du fascicule du brevet :
30.11.88

(51) Int. Cl.⁴ : **B 60 P  3/42**, B 60 P  3/22

(21) Numéro de dépôt : **86400291.0**

(22) Date de dépôt : **11.02.86**

(54) Véhicule en particulier semi-remorque transformable.

(30) Priorité : **13.02.85 FR 8502071**

(43) Date de publication de la demande :
**27.08.86 Bulletin 86/35**

(45) Mention de la délivrance du brevet :
**30.11.88 Bulletin 88/48**

(84) Etats contractants désignés :
**AT BE CH DE GB IT LI LU NL SE**

(56) Documents cités :
DE-A- 1 806 095
FR-A- 1 011 444
FR-E-    72 330
PATENTS ABSTRACTS OF JAPAN, vol. 9, no. 34 (M-357) [1757], 14 février 1985; & JP - A - 59 176 132 (SHINMEIWA KOGYO K.K.) 05-10-1984

(73) Titulaire : **PIOGER & FILS**
**Route de Sablé**
**F-72140 Sille le Guillaume (FR)**

(72) Inventeur : **Pioger, Christian**
**Route de Sablé**
**F-72140 Sille le Guillaume (FR)**

(74) Mandataire : **Madeuf, Claude Alexandre Jean et al**
**CABINET MADEUF 3, avenue Bugeaud**
**F-75116 Paris (FR)**

EP 0 192 559 B1

Jouve, 18, rue St-Denis, 75001 Paris, France

## Description

La présente invention a pour objet un véhicule pouvant être soit une semi-remorque soit le plateau d'un camion et comprenant des moyens permettant de le transformer soit en citerne pour le transport de liquides divers, soit en plateau pour le transport d'objets en vrac sur palettes ou non, le plancher du véhicule étant alors dégagé par une élévation de la citerne qui soulève le pavillon.

Il est très difficile de réaliser un véhicule du type ci-dessus que les spécialistes appellent un véhicule bifonctionnel qu'il soit une semi-remorque où un plateau de camion car la bifonction consiste tant au transport de liquides au moyen d'une ou des citernes qu'au transport d'objets en vrac en particulier sur palettes.

En effet, au moment de la transformation du véhicule pour le transport d'objets palettisés, on est amené à décrocher la citerne pour dégager la plate-forme, ce qui est une manœuvre longue, difficile et dangereuse et qui ne permet pas le transport alterné de liquides et de matières en vrac.

De plus, les citernes connues dans la technique sont spécialisées pour le transport soit de produits alimentaires, soit de produits pétroliers, soit de produits de l'industrie chimique, ce qui présente un nouvel inconvénient.

La présente invention remédie à ces inconvénients en créant un véhicule qui peut être utilisé, alternativement, pour le transport de liquides divers et sans être transformé pour le transport des produits sur palettes ou en vrac mais contenus dans des conteneurs divers.

Bien que l'on connaisse déjà des véhicules à plancher mobile par exemple des bétaillères ou pour le transport de véhicules d'automobile, ces installations ne permettent pas le but recherché, c'est-à-dire le transport de liquides et de produits secs plus ou moins volumineux, granuleux ou pulvérulents à tour de rôle.

On connaît notamment du DE-A-1 806 095 un camion dans lequel la plate-forme arrière inférieure sur laquelle repose une citerne peut être dégagée, l'élévation de la citerne s'effectuant à l'aide d'un treuil et de câbles passant par des poulies, mais ne provoquant pas l'élévation du toit du véhicule.

Conformément à l'invention, le véhicule en particulier semi-remorque transformable pour permettre le transport, d'une part, de liquides divers et, d'autre part, de produits solides, granuleux ou pulvérulents, palettisés ou en containers, qui comporte : un plancher portant latéralement des montants verticaux, un pavillon sous lequel sont placées des poulies folles permettant avec au moins un câble l'élévation des citernes, à l'aide d'un organe de levage tel qu'un treuil, est caractérisé en ce que les montants verticaux contiennent des tubes coulissant verticalement, convenablement guidés dans ces montants pour porter le pavillon, et permettre l'élévation des citernes compartimentées, ce qui provoque à un certain moment l'élévation du pavillon fixé en bout des tubes coulissants et dégage le plancher du véhicule qui reçoit alors les palettes ou les containers.

Suivant une autre caractéristique de l'invention, les extrémités des câbles permettant d'élever ou d'abaisser les citernes sont reliées à des palonniers horizontaux actionnés par les tiges de vérins à simple effet placés dans l'épaisseur du plancher, l'alimentation de ces vérins étant commandée à partir d'un groupe motopompe à travers des limiteurs de pression et des électrovannes contrôlés par une télécommande installée sur le véhicule.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation latérale, à petite échelle, d'une semi-remorque dont les bâches latérales ont été enlevées.

La fig. 2 est un plan d'un élément de citerne d'un type utilisé sur la semi-remorque de la fig. 1.

La fig. 3 est une élévation latérale de la semi-remorque de la fig. 1 montrant les citernes en position haute afin de dégager le plancher horizontal de la semi-remorque.

La fig. 4 est une coupe prise suivant la ligne IV-IV de la fig. 3 montrant, à plus grande échelle, un détail du plancher de la semi-remorque.

La fig. 5 est une vue en perspective éclatée d'une partie du plancher de la semi-remorque.

La fig. 6 est un schéma montrant un dispositif de contrôle permettant le fonctionnement des organes moteurs pour l'abaissement ou l'élévation de la ou des citernes sur le plancher de la semi-remorque.

La description qui va suivre est basée exclusivement sur la réalisation conforme à l'invention d'une semi-remorque mais on peut également, sans aucune modification, prévoir le même montage sur le plateau d'un camion.

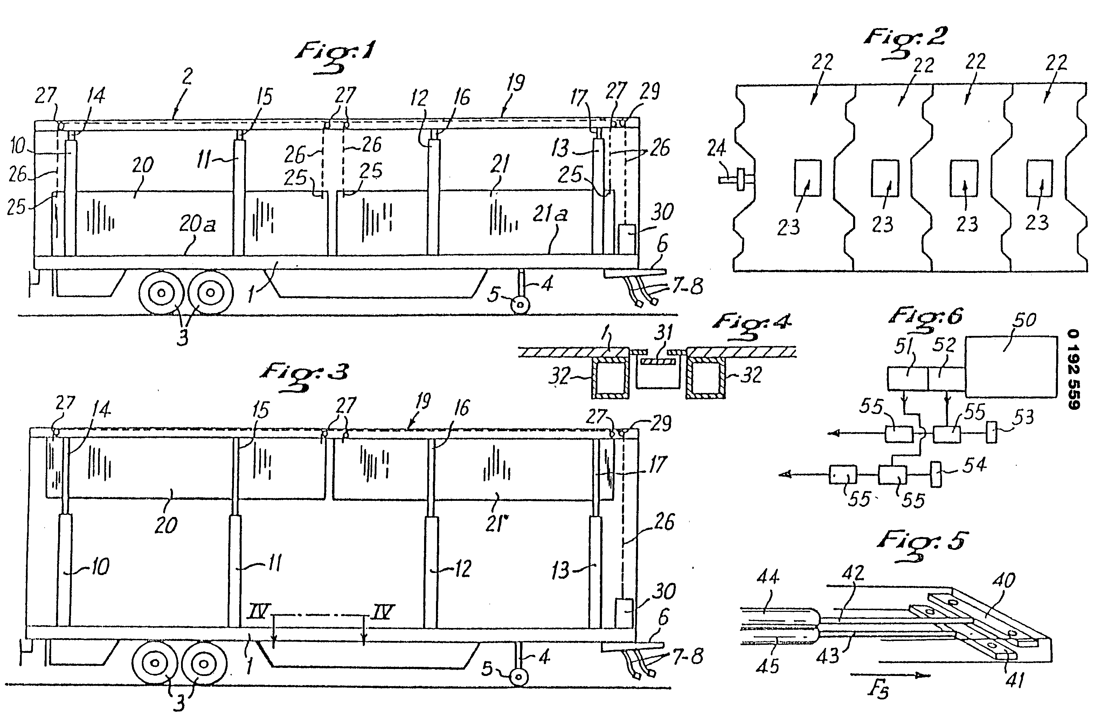

A la fig. 1, on a représenté schématiquement le plancher 1 d'une semi-remorque 2 comportant un double train de roues arrière 3, un porte-béquille 4 à l'avant muni de roulettes 5. Le dessous du plancher 1, formant le plateau de la semi-remorque, présente à sa partie avant une selle 6 destinée à venir coopérer avec l'organe de jonction placé à l'arrière du tracteur de la semi-remorque.

7 et 8 désignent les câbles souples reliant la semi-remorque au tracteur afin d'assurer, à partir de celui-ci, les commandes électriques, pneumatiques, électropneumatiques nécessaires pour le freinage, le relevage des béquilles 4, la signalisation lumineuse de la semi-remorque ainsi que pour l'emploi de l'énergie nécessaire au fonctionnement des différents moteurs actionnant les ensembles mobiles de la semi-remorque.

Le plancher 1 supporte latéralement, dans le cas présent, quatre montants, 10, 11, 12, 13 dans lesquels sont placés des tubes 14, 15, 16, 17 qui peuvent se déplacer en coulissant verticalement à l'intérieur des montants 10 à 13. La partie supérieure des tubes 14 à 17 porte le pavillon 19 formant le toit de la semi-remorque. Normalement, sur la face supérieure du plancher 1 de la semi-remorque sont posées deux citernes 20, 21 qui peuvent avoir, en plan, la forme représentée à la fig. 2, c'est-à-dire être constituées par des éléments 22 juxtaposés et dont les parois sont symétriques mais ondulées afin de casser les mouvements de tangage et de roulis des liquides provoqués par les secousses de la semi-remorque pendant un parcours.

23 désigne les postes de remplissage supérieurs des compartiments qui permettent également la mise à l'air libre pendant la vidange et en même temps le nettoyage de ces compartiments de citerne.

Finalement, 24 désigne le robinet de vidange de l'ensemble des compartiments 22 qui sont reliés les uns aux autres par des petites canalisations non représentées.

Chaque citerne 20 ou 21 présente à une certaine distance de chaque extrémité des points d'attache 25 (donc au nombre de quatre pour chaque citerne), points d'attache qui sont reliés à des câbles 26 passant sur des poulies 27 montées folles sur des axes solidaires du dessous du pavillon 19.

Finalement, les câbles 26 aboutissent à des poulies 29 de sorte que l'ensemble des câbles 26 peut être tiré par un treuil 30 placé soit sur la partie avant du plancher 1 de la semi-remorque soit au-dessous de la semi-remorque.

Bien entendu, ce treuil, muni de freins et d'organes de blocage habituels, est entraîné par un moteur pouvant être électrique, pneumatique ou hydraulique suivant la source d'énergie qui est placée sur le tracteur de la semi-remorque.

Pendant le transport de liquides, par exemple de liquides alimentaires tels que du vin, les citernes 20, 21 occupent la position représentée à la fig. 1 et reposent donc par leurs fonds 20a, 21a sur le dessus du plancher 1 de la semi-remorque.

Pour arrimer correctement les citernes, celles-ci comportent des organes semi-souples qui sont fixés sur chaque montant 10, 11, 12, 13.

On obtient ainsi un arrimage correct rapidement mis hors service pour élever des citernes 20, 21.

Lorsque les citernes 20, 21 sont vidées et que l'on désire transporter à l'aide de la semi-remorque des produits placés sur des palettes, on met en service le treuil 30 de façon que l'ensemble des câbles 26 soit enroulé sur le tambour du treuil, ce qui provoque, après enlèvement des arrimages sur les montants 10, 11, 12, 13 l'élévation des citernes 20, 21 qui, lorsqu'elles arrivent en contact avec le dessous du pavillon 19, élèvent ce dernier puisque les tubes 14 à 17 peuvent être mus verticalement dans les montants 10 à 13 (fig. 3).

Arrivées à une position haute suffisante, les citernes dégagent la partie supérieure du plancher 1 de la semi-remorque. On verrouille alors le tambour du treuil 30 puis, également par des moyens connus, les tubes 14 à 17 dans les montants 10 à 13, en assurant ainsi un maintien correct des citernes 20, 21 à leur position de repos haute.

A ce moment, il est possible de charger, sur le dessus du plancher 1, des produits palettisés.

Bien entendu, les bâches solidaires du pavillon 19 sont prévues d'une longueur suffisante pour pouvoir fermer les parois latérales ainsi que la partie avant et la partie arrière de la semi-remorque que ce soit dans la position représentée à la fig. 1 (pavillon 19 en position basse) ou dans la position de la fig. 3 (pavillon 19 en position haute).

Dans ce qui précède, on a indiqué que les câbles 26 s'enroulaient sur le tambour d'un treuil 30 mais on peut également prévoir que ces câbles 26 sont liés à des palonniers 40, 41 (fig. 5) dont le déplacement horizontal est provoqué par les tiges 42, 43 des vérins à simple effet 44, 45 disposés horizontalement dans l'épaisseur du plancher 1 de la semi-remorque.

Dans la position haute des citernes 20, 21, les palonniers occupent la position représentée à la fig. 5.

Dans la position basse des citernes 20, 21 les tiges 42, 43 des vérins 44, 45 ont été appelées dans les cylindres des vérins, les palonniers 40, 41 se sont donc déplacés vers la gauche dans le sens contraire à la flèche $F_5$ (fig. 5) et ce mouvement a entraîné l'appel des câbles 26 et donc l'abaissement, d'une part, des citernes 20, 21 et, d'autre part, simultanément, du pavillon 19 comme déjà décrit ci-dessus.

Dans le cas de la commande par vérin, il est prévu un groupe motopompe 50, 51, 52 qui en passant par des limiteurs de pression 53, 54 transmet, à des électrovannes 55, l'énergie nécessaire au déplacement des tiges 42, 43 des vérins à simple effet 44, 45. Bien entendu, le fonctionnement du groupe sus-décrit de la fig. 6 peut être réalisé à partir d'une télécommande placée, par exemple, dans la cabine du chauffeur du tracteur de la semi-remorque. Il est également prévu des dispositifs de sécurité sur un tel organe moteur conforme aux règles applicables en la matière.

La montée des citernes 20, 21, à l'aide du dispositif des fig. 5 et 6, s'effectue en sens inverse à celui sus-décrit après avoir enlevé les sécurités prévues. C'est pourquoi, les vérins 44, 45 sont à simple effet.

A titre de remarque supplémentaire, l'élévation des citernes 20 et 21 est suffisante pour que la manutention des produits palettisés se fasse à l'aide de chariots automoteurs élévateurs.

Lorsque l'on utilise des vérins à simple effet, la descente des citernes 20, 21 se fait simplement par l'ouverture des électro-vannes 55, le liquide retourne donc au réservoir basse pression et sous l'effet de leur propre poids, les citernes 20, 21 s'abaissent doucement sur le plancher 1.

On peut également prévoir que les citernes 20, 21 se lèvent indépendamment l'une de l'autre afin de permettre un transport mixte de liquide et produits palettisés. Dans ce cas, il est, en général, prévu que la citerne 20 soit utilisée pour le transport de liquide et que la citerne 21 soit élevée pour dégager le plancher 1.

**Revendications**

1. Véhicule en particulier semi-remorque transformable pour permettre le transport, d'une part, de liquides divers et, d'autre part, de produits solides, granuleux ou pulvérulents, palettisés ou en containers, qui comporte un plancher (1) portant latéralement des montants verticaux (10, 11, 12, 13), un pavillon (19) sous lequel sont placées des poulies folles (27) permettant avec au moins un câble l'élévation des citernes à l'aide d'un organe de levage tel qu'un treuil (30), caractérisé en ce que les montants verticaux (10, 11, 12, 13) contiennent des tubes coulissant verticalement, convenablement guidés dans ces montants pour porter le pavillon (19) et permettre l'élévation des citernes compartimentées (20, 21), ce qui provoque à un certain moment l'élévation du pavillon (19) fixé en bout des tubes coulissants (14, ...17) et dégage le plancher (1) du véhicule qui reçoit alors les palettes ou les containers.

2. Véhicule suivant la revendication 1, caractérisé en ce que les extrémités des câbles (26) permettant d'élever ou d'abaisser les citernes (20, 21) sont reliées à des palonniers horizontaux actionnés par les tiges de vérins à simple effet placés dans l'épaisseur du plancher (1) l'alimentation de ces vérins étant commandée à partir d'un groupe motopompe (50, 51, 52) à travers des limiteurs de pression (53, 54) et des électro-vannes (55) contrôlés par une télécommande installée sur le véhicule.

3. Véhicule suivant la revendication 1, caractérisé d'une part par les citernes (20, 21), les palettes ou containers qui sont maintenus sur le plancher (1) du véhicule par des barres transversales (31) au moyen d'organes d'accrochage et, d'autre part, par les tubes coulissants verticalement (14, 15, 16, 17) qui sont verrouillés en positions basse et haute par des dispositifs de sécurité.

4. Véhicule suivant la revendication 1, caractérisé d'une part, par un système de verrouillage des citernes dans les positions haute et basse et, d'autre part, indépendamment par des dispositifs de sécurité.

5. Véhicule suivant la revendication 1, caractérisé en ce que les produits conditionnés peuvent être maintenus au plancher par des bancs longitudinaux (4) au moyen d'organes d'accrochage (31).

**Claims**

1. Vehicle, particularly convertible semi-trailer for the transportation on the one hand of various liquids and on the other hand of solid, granular or pulverulent products, either palletized or in containers, which includes a floor (1), laterally carrying vertical uprights (10, 11, 12, 13), a hood (19) under which are placed idle pulleys (27) enabling, with at least one cable, the lifting of the tanks with the assistance of a lifting member such as a winch (30), characterized in that the vertical uprights (10, 11, 12, 13) contain vertically sliding tubes, conveniently guided inside these uprights for carrying the hood (19) and lifting the compartmented tanks (20, 21), thereby causing at a certain moment the lifting of the hood (19) attached to ends of the sliding tubes (14, ... 17) and the clearing of the floor (1) of the vehicle which then receives the pallets or containers.

2. Vehicle according to claim 1, characterized in that the ends of the cables (26) which allow lifting or lowering the tanks (20, 21) are connected to horizontal rudder bars actuated by the rods of single-acting cylinders placed within the thickness of floor (1), the powering of said cylinders being controlled from a motor-driven pump unit (50, 51, 52) via pressure relief valves (53, 54) and electrovalves (55) controlled from a remote control device installed on the vehicle.

3. Vehicle according to claim 1, characterized on the one hand by the tanks (20, 21), the pallets or containers which are maintained on the floor (1) of the vehicle by transverse bars (31) by means of hooking members and, on the other hand, by vertically sliding tubes (14, 15, 16, 17) which are locked in a low and in a high position by safety devices.

4. Vehicle according to claim 1, characterized on the one hand by a locking system of the tanks in the high and low positions and, on the other hand, independently, by safety devices.

5. Vehicle according to claim 1, characterized in that the conditioned products can be maintained to the floor by longitudinal benches (4) by means of hooking members (31).

**Patentansprüche**

1. Fahrzeug, insbesondere Anhängerfahrzeug für einen Sattelschlepper, das für den Transport einerseits von verschiedenen Flüssigkeiten und andererseits von festen, körnigen oder pulverförmigen Produkten, auf Paletten oder in Containern, umrüstbar ist, mit einem Boden (1), der seitlich vertikale Ständer (10, 11, 12, 13) trägt, und einem Verdeck (19), unter dem Leerrollen (27) angeordnet sind, die mittels wenigstens einem Seil das Anheben von Behältern mit Hilfe einer Hebeeinrichtung wie einer Winde (30) ermöglichen, dadurch gekennzeichnet, daß die vertikalen Ständer (10, 11, 12, 13) in vertikaler Richtung gleitende Rohre umfassen, die in den Ständern passend geführt sind und das Verdeck (19) tragen und das Anheben der abgeteilten Behälter (20, 21) ermöglichen, was zu einem bestimmten Zeitpunkt das Anheben des Verdecks (19) bewirkt, das am Ende der gleitenden Rohre (14, ...17) befestigt ist, und zum Freimachen des Bodens (1) des Fahrzeugs führt, der dann die Paletten oder die Container aufnimmt.

2. Fahrzeug nach Anspruch 1, dadurch gekennzeichnet, daß die Enden der Seile (26) zum Anheben oder Absenken der Behälter (20, 21) mit horizontalen Schwengeln verbunden sind, auf welche die Kolbenstangen von einseitig beaufschlagten Kraftzylindern einwirken, die innerhalb der Dicke des Bodens (1) angeordnet sind, wobei die Druckmittelzuführung zu den Kraftzylindern von einer Gruppe von Kraftantriebspumpen (50, 51, 52) ausgeht und an Druckbegrenzern (53, 54) sowie Elektroventilen (55) vorbeiführt, die durch eine Fernsteuerung gesteuert werden, die auf dem Fahrzeug installiert ist.

3. Fahrzeug nach Anspruch 1, dadurch gekennzeichnet, daß die Behälter (20, 21), die Paletten oder die Container einerseits durch Querstangen (31) mittels Sperrgliedern auf dem Boden (1) des Fahrzeugs und andererseits durch die in vertikaler Richtung gleitenden Rohre (14, 15, 16, 17) gehalten sind, die in den unteren und oberen Stellungen durch Sicherheitsarretierungen verriegelt sind.

4. Fahrzeug nach Anspruch 1, dadurch gekennzeichnet, daß einerseits ein Verriegelungssystem für die Behälter in den oberen und unteren Stellungen und andererseits unabhängig davon Sicherheitsarretierungen vorgesehen sind.

5. Fahrzeug nach Anspruch 1, dadurch gekennzeichnet, daß die aufgenommenen Produkte auf dem Boden durch Längsgestelle (4) mittels Sperrgliedern (31) gehalten werden können.

*Fig.1*

*Fig.2*

*Fig.3*

*Fig.4*

*Fig.5*

*Fig.6*